# EUROPEAN PATENT APPLICATION

(11) **EP 2 136 540 A1**
(43) Date of publication of application: **23.12.2009**
(21) Application number: 09162397.5
(22) Date of filing: 10.06.2009
(51) Int. Cl.: H04M 1/725

(54) **Apparatus and method for controlling location alarm in portable terminal**

(30) Priority: 19.06.2008 KR 20080057778
(71) Applicant: Samsung Electronics Co., Ltd., Suwon-si, Gyeonggi-do (KR)
(72) Inventor: Kim, Hyang Ah, Gyeonggi-do (KR); Shin, Dong Jun, Gyeonggi-do (KR); Kim, Kyoung Taek, Gyeonggi-do (KR); KIM, Hyun Kyoung, Gyeonggi-do (KR); Kim, Jin Yong, Gyeonggi-do (KR)
(74) Representative: Harrison Goddard Foote

(57) **Abstract**

The present invention relates to an apparatus and method that can control a location alarm in a portable terminal. The apparatus can operate in multiples modes. The apparatus can determine whether set location information exists, and can check if location information corresponding to a current location of the apparatus exists. The apparatus can also determine whether the current location information corresponds to the set location information and may output an alarm if the current location information corresponds to the set location information.

## Description

### BACKGROUND OF THE INVENTION

### FIELD OF THE INVENTION

Embodiments of the present invention relate to portable terminals that can control a data alarm, and more particularly, to an apparatus and method for controlling a location alarm related to a location stored in a portable terminal.

### DESCRIPTION OF THE BACKGROUND

In recent years, portable terminals have been developed to include a variety of functions to meet portable terminal users' demands. Portable terminals have a voice call function, a video call function, a camera function, an Internet function, an MP3 player function, etc. Portable terminals can also include various functions, such as an electronic calculator function, a schedule management function, and/or an alarm function.

In particular, the alarm function refers to a function that can allow a user to recognize events, such as a morning call, an appointment, or a task at a time stored in the portable terminal. The conventional alarm function is, however, disadvantageous in that an alarm can only be controlled with respect to time. The conventional portable terminal is also disadvantageous in that, when it performs an alarm function, it does not use stored information, but instead can only provide time and events corresponding to a particular time.

### SUMMARY OF THE INVENTION

Exemplary embodiments of the present invention provide an apparatus and method that can control an alarm based on location information stored in a portable terminal.

Exemplary embodiments of the present invention further provide an apparatus and method that provides a user interface for an alarm function using location information in a portable terminal.

Additional features of the invention will be set forth in the description which follows, and in part will be apparent from the description, or may be learned by practice of the invention.

Exemplary embodiments of the present invention disclose a method for controlling a location alarm in a portable terminal. The method comprises determining, in a location alarm mode, whether location information is stored in the portable terminal and checking current location information corresponding to a current location of the portable terminal if the set location information is stored. The method further comprises determining whether the current location information corresponds to the stored location information and outputting the location alarm if the current location information corresponds to the stored location information.

Other exemplary embodiments of the present invention disclose a method for controlling a location alarm in a portable terminal. The method comprises receiving, in a location alarm setting mode, location information corresponding to a location to be alarmed at and an event to be performed at the location. The method further comprises determining if the received location information is stored in the portable terminal and determining current location information corresponding to a current location of the portable terminal. The method further comprises determining whether the determined current location information corresponds to the location information stored in the portable terminal and outputting the location alarm if the current location information corresponds to the location information stored in the portable terminal.

Other exemplary embodiments of the present invention disclose a portable terminal comprising a global positioning system unit, an audio processing unit, and a controller. The global positioning system unit receives at least one piece of location information corresponding to a current location of the portable terminal. The audio processing unit outputs an alarm. The controller compares the current location information, received through the global positioning system unit, with stored location information. The controller is configured to instruct the audio processing unit to output the alarm if the current location information corresponds to the stored location information.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1A is a schematic block diagram illustrating a portable terminal according to an exemplary embodiment of the present invention.

FIG. 1 B is a view illustrating a screen displayed on a display unit of the portable terminal according to an exemplary embodiment of the present invention.

FIG. 2 is a flow chart describing a method for performing a location alarm operation in a portable terminal according to an exemplary embodiment of the present invention.

FIG. 3 is a flow chart describing a method for setting a location alarm, according to an exemplary embodiment of the present invention.

FIG. 4 is a flow chart describing a method for performing a location alarm setting mode, according to an exemplary embodiment of the present invention.

### FIG. 5A, FIG. 5B, FIG. 5C, FIG. 5D, FIG. 5E, FIG. 5F, FIG. 5G, FIG. 5H,

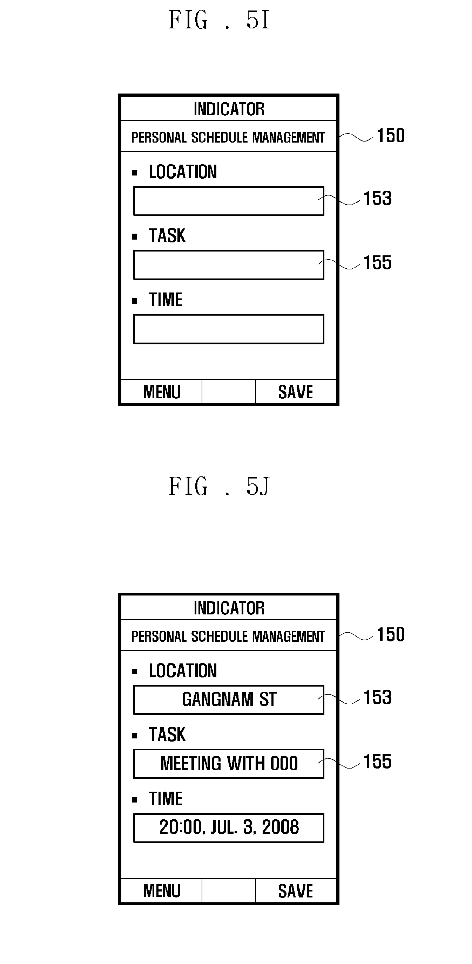

FIG. 5I, and FIG. 5J show screens when a portable terminal is operated in a location alarm setting mode according to an exemplary embodiment of the present invention.

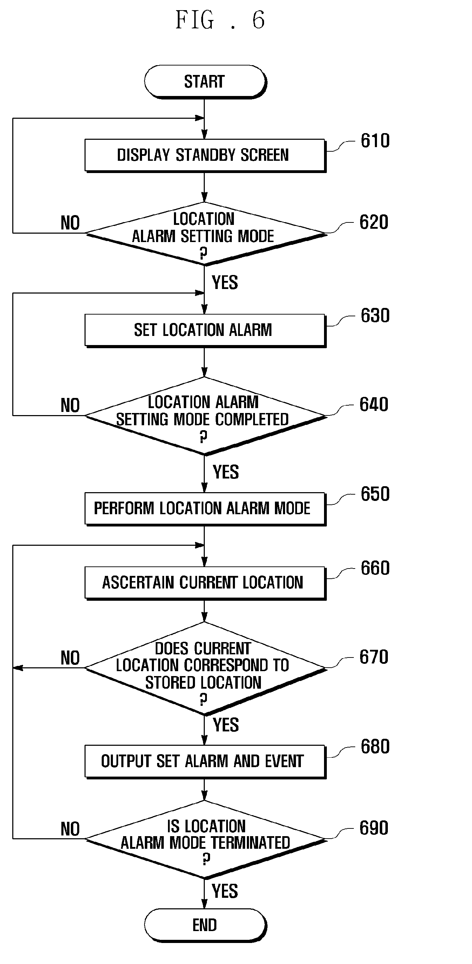

FIG. 6 is a flow chart describing a method for performing a location alarm mode according to an exemplary embodiment of the present invention.

### DETAILED DESCRIPTION OF THE ILLUSTRATED EMBODIMENTS

Embodiments of the present invention are described more fully hereinafter with reference to the accompanying drawings in which exemplary embodiments of the invention are illustrated. Embodiments of the invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the sizes and relative sizes of layers and regions may be exaggerated for clarity. Detailed descriptions of well-known functions and structures incorporated herein may be omitted to avoid obscuring the subject matter of the embodiments. Like reference numerals in the drawings denote like elements.

It will be understood that although the terms first, second, third etc. may be used herein to describe various elements, components, regions, layers and/or sections, these elements, components, regions, layers and/or sections should not be limited by these terms. These terms are used to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular example embodiments and is not intended to be limiting of the present invention. As used herein, the singular forms "a," "an" and "the" can include the plural forms as well, unless the context clearly indicates otherwise. It will be further understood that the terms "comprises" and/or "comprising," when used in this specification, can specify the presence of stated features, integers, steps, operations, elements, and/or components, but do not necessarily preclude the presence or addition of one or more other features, integers, steps, operations, elements, components, and/or groups thereof.

Example embodiments of the invention are described herein with reference to cross-sectional illustrations that are schematic illustrations of idealized example embodiments (and intermediate structures) of the present invention. As such, variations from the shapes of the illustrations as a result of, for example, manufacturing techniques and/or tolerances, are to be expected. Thus, example embodiments of the present invention should not be construed as limited to the particular shapes of regions illustrated herein but can include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Prior to describing the exemplary embodiments of the present invention, terminologies will be defined for the description below:

A 'location alarm mode' refers to a mode where, if a portable terminal is located at a location, the portable terminal may notify a user through a set alarm method that the user's current location corresponds to a previously stored location. The set alarm method may be implemented through various mechanisms including, for example, an audio sound such as a bell sound, a vibration with and without an audio sound, a lamp, or a method for displaying an event set with a location.

A 'location alarm setting mode' refers to a mode that allows a user to set a portable terminal to output an alarm when the portable terminal is at a location. The location alarm setting mode may include several modes, such as a personal information management system (PIMS), which can allow a user to manage information corresponding to an event and location related to personal information. The PIMS may include several modes, such as, for example, a schedule management mode, a memo mode, a buy listing mode, etc., which can allow a user to input, store, and manage an event and location related to personal information.

A 'location' refers to a particular location or place where a user may perform a particular event. The 'location' may include, but is not limited to, a place name, a shop name, an address, and/or a phone number.

'Location information' refers to information required to search a particular location when a navigation function is enabled in a portable terminal. The 'location information' may include information about latitude, longitude, altitude, etc. at a particular location.

An 'event' refers to a task that a user must perform or a user is interested in. Examples of an event may include, but are not limited to, a meeting, a council, an appointment, goods purchasing, performance viewing, a hobby activity, a favorite restaurant, and/or an interesting place.

A portable terminal may acquire location information through a global positioning system (GPS) or an assisted-GPS (A-GPS). Location information acquired using a GPS is a method wherein a portable terminal directly may receive satellite information from one or more GPS satellites, analyze the information, and detect the portable terminal's current location. Location information acquired using an A-GPS is a method wherein a portable terminal may receive information from one or more GPS satellites through its network and determine its current location.

Hereinafter, exemplary embodiments of the present invention will be explained in detail with reference to the accompanying drawings.

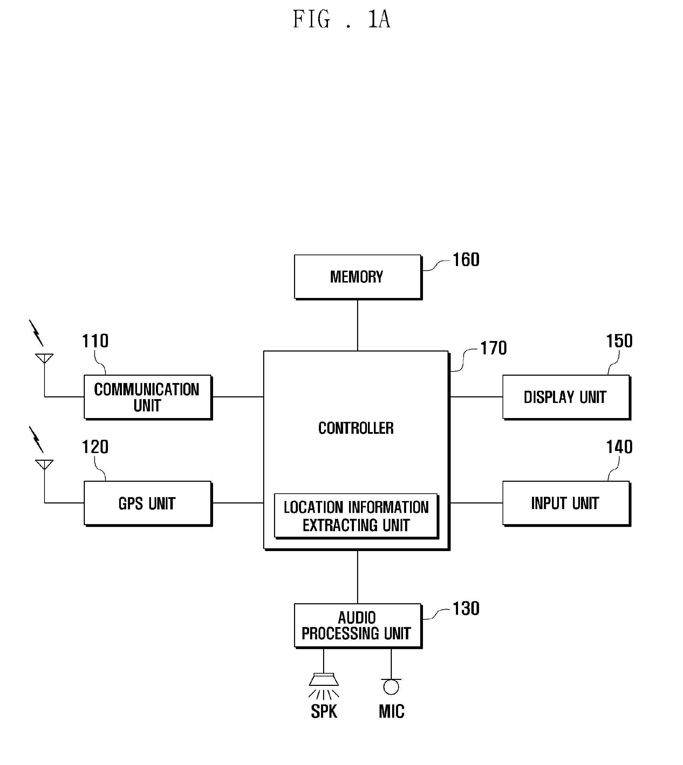

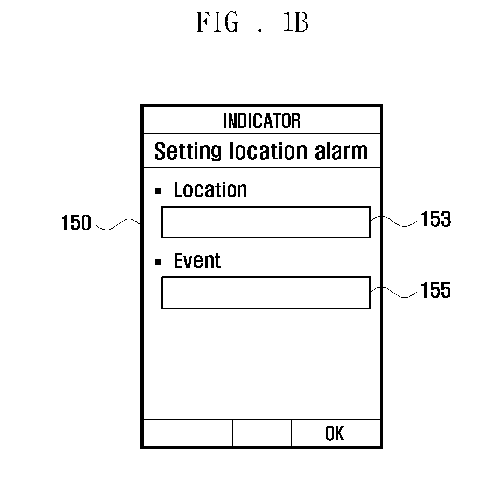

FIG. 1A is a schematic block diagram illustrating a portable terminal according to an exemplary embodiment of the present invention. FIG. 1 B is a view illustrating a screen displayed on a display unit of the portable terminal according to an exemplary embodiment of the present invention.

Referring to FIG. 1A and FIG. 1B, the portable terminal may include a communication unit 110, a global positioning system (GPS) unit 120, an audio processing unit 130, an input unit 140, a display unit 150, a memory 160, and a controller 170.

The communication unit 110 may communicate with a base station and may include a duplexer for separating transmission and reception functions. A transmitter may be used for up-converting frequency of signals to be transmitted, and a receiver may be used for down-converting the frequency of received signals. The receiver may also receive satellite information from a network to which the portable terminal subscribes to.

The GPS unit 120 may receive satellite information from one or more GPS satellites. In particular, the satellite information may include location information corresponding to a current location of the portable terminal. The satellite information may also include ephemeris data, almanac data, and GPS time data of respective GPS satellites. The location information may include information about longitude, latitude, and/or altitude of a current location of the portable terminal.

The audio processing unit 130 may modulate a voice signal input through a microphone MIC and may output it to the controller 170. The audio processing unit 130 may also demodulate voice signals from the controller 170 and output the voice signals through a speaker SPK. In particular, when the portable terminal is operated in a location alarm mode, the audio processing unit 130, under the control of the controller 170, can notify a user through an alarm that a current location of a portable terminal corresponds to a stored location. It should be understood that multiple speakers and microphones may also be utilized in different configurations.

The input unit 140 may receive data, such as numerical or character information, from a user and may output to the controller 170, signals related to various mode settings and mode controlling of a portable terminal. The input unit 140 may be implemented with a touch screen, user-interface, or a key pad. The key pad may include character keys having numbers, characters, functions keys, and/or soft keys. If the input unit 140 is implemented with a touch screen, the input unit 140 may include a sensor for detecting a touch. In particular, the input unit 140 may include a function key for activating a location alarm mode.

The display unit 150 may display information related to one or more states and operations of a portable terminal. The display unit 150 may be implemented with an LCD. In some cases, the display unit 150 may include an LCD controller and/or an LCD device. In particular, if the LCD is implemented with a touch screen, the display unit 150 may also serve as the input unit 140. Accordingly, in some cases, the display unit 150 and the input unit 140 may be combined in a single unit. When a portable terminal is operated in a location alarm mode, the display unit 150 can display, in a pop-up style, an event that a user may perform at a location stored in the portable terminal. The controller 170 can determine when the display unit 150 displays an event.

The display unit 150, as shown in FIG. 1 B, may display a location alarm input window when a location alarm may be set. The location alarm input window may include a location input field 153 for receiving a location. The location alarm input window may further include an event input field 155 for receiving an event that a user may perform at the input location. The location and/or the event may also be input by a user through the input unit 140.

The memory 160 may store programs for controlling operations of a portable terminal and data generated as the portable terminal operates. In particular, the memory 160 can store location information and events that are input to operate in a location alarm mode. Examples of an event include, but are not limited to, a meeting, a council, an appointment, goods purchasing, performance viewing, a hobby activity, a favorite restaurant, and/or a place of interest. The memory 160 can store, in a location alarm mode, an alarm method for alarming or notifying the user of a location. The memory can store data and programs under the control of the controller 170.

The memory 160 can also store a plurality of pieces of location information received from external sides, such as the Internet or other portable terminals. The memory 160 can store the plurality of pieces of location information in the process of manufacturing a portable terminal or by a user's input operation. The memory 160 can also store a map, a subway route map, and/or other pieces of corresponding location information at locations marked in the map and/or subway route map.

The controller 170 may control the operation and state of a portable terminal. The controller 170 may include a location information extracting unit 175 that can extract current location information of a portable terminal using satellite information received through the GPS unit 120 or the communication unit 110. The location information extracting unit 175 can acquire current location information of a portable terminal using trigonometry or any suitable method that calculates current location information through satellite information obtained from GPS satellites. In some cases, at least three GPS satellites may be used. If the received GPS satellite information includes current location information of a portable terminal, the location information extracting unit 175 can extract the location information from the satellite information. The location information extraction can be implemented with various well-known methods, whose detailed descriptions will be omitted herein.

The controller 170 may compare current location information, extracted by the location information extracting unit 175, with stored location information. According to the comparison result, the controller 170 may instruct the audio processing unit 130 to output an alarm through a set alarming method, or the controller 170 may instruct the display unit 150 to display an event corresponding to stored location information.

The controller 170 can search for location information corresponding to a location input through the input unit 140 when a portable terminal is operated in a location alarm setting mode. The controller 170 can search for and download location information about the input location over the Internet or can search for it from pieces of location information stored in the memory 160. The controller 170 can also search for location information about the input location through a wireless network, such as a communication network in which the location information may be known. The controller 170 may control the memory 160 to store the searched location information together with a corresponding event.

According to exemplary embodiments of the present invention, the controller 170 may store location information corresponding to a location input through the location input field 153 and an event input through the event input field 155 in a location alarm setting mode. The controller 170 may also store location information corresponding to a particular location selected when a subway route map or a map is displayed and store location information corresponding to a location that a user searches through the Internet and is interested in. The controller 170 can recognize a location input through the location input field 153 in order to set location information for a location alarm. The controller 170 can also detect a particular location selected while a map or a subway route map is displayed as a location input to set location information. If a user searches for a particular location through the Internet, the controller 170 may recognize location information corresponding to the searched location as location information for setting a location alarm and may store the location information in the memory 160.

Although not shown in the drawings, the portable terminal may further include a wireless Internet unit and a short-range communication unit. The wireless Internet unit may be connected to and may communicate with the Internet or other wireless networks such as, for example, a WiMax network or Wibro network. The short-range communication unit may perform wireless communication such as Bluetooth communication or infrared communication. The portable terminal can receive location information, which corresponds to a location input in a location alarm setting mode, from the other terminals or through the Internet.

The controller 170 may store location information and an event corresponding to the location input through the input unit 140 in the memory 160 of the portable terminal. The controller 170 can check a current location of the portable terminal using satellite information received through the GPS unit 120 or the communication unit 110. If the current location corresponds to a stored location, the controller 170 may instruct the audio processing unit 130 to output an alarm and the display unit 150 to display an event corresponding to the stored location.

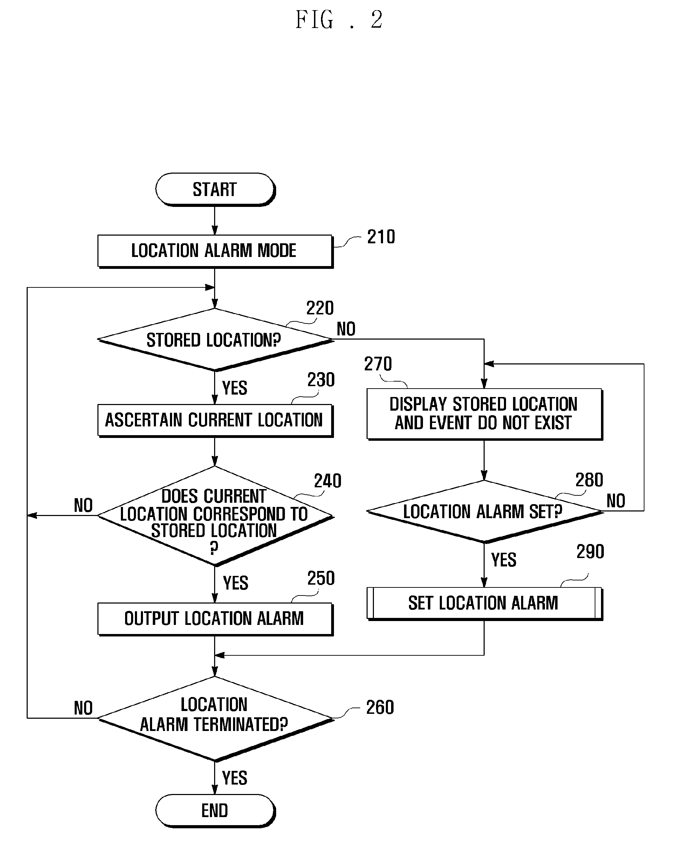

FIG. 2 is a flow chart describing a method for performing a location alarm operation in a portable terminal according to exemplary embodiments of the present invention.

Referring to FIG. 2, when a location alarm mode is selected through a menu or through a function key of the input unit 140, the controller 170 may detect the mode selection and change a mode of the portable terminal to a location alarm mode (S210). The controller 170 may determine whether location information is stored in the memory 160 (S220). The location information refers to information corresponding to a location that a user stored through a memo mode, a schedule management mode, and/or a buy listing mode.

If the controller 170 ascertains that location information is stored in the memory 160 at S220, the controller 170 may extract location information corresponding to a current location of a portable terminal from satellite information received through the communication unit 110 or the GPS unit 120 (S230). The controller 170 may detect the current location of the portable terminal through the extracted current location information. The controller 170 may then determine whether the current location of the portable terminal corresponds to a stored location (S240). That is, the controller 170 may compare the current location information obtained from the satellite information with location information stored in the memory 160 and may determine whether the current location information is coincident with the stored location information.

If the controller 170 ascertains that the current location corresponds to the stored location, the controller 170 may instruct the audio processing unit 130 to output an alarm to notify the location in a preset alarming method (S250). The controller 170 may also instruct the display unit 150 to display the current location of the portable terminal. The display unit 150 may also display an event that a user must perform at the displayed location. The location of the portable terminal can be displayed on the map or through a text.

The controller 170 may also determine whether a location alarm termination is selected (S260). If the controller 170 ascertains that a location alarm termination is not selected at S260, the controller 170 returns to and proceeds with S220. As these steps are repeated, the controller 170 can output a location alarm each time that a current location of a portable terminal corresponds to a stored location. Although a plurality of locations may be stored in the memory 160, the controller 170 can output a location alarm at every corresponding location. The location alarm mode may be performed as a menu is selected or as a function key of the input unit 140 is selected. It should be understood that, in some exemplary embodiments, if location information is stored in the memory 160 and a location alarm mode is not selected, the controller 170 can automatically perform a location alarm mode.

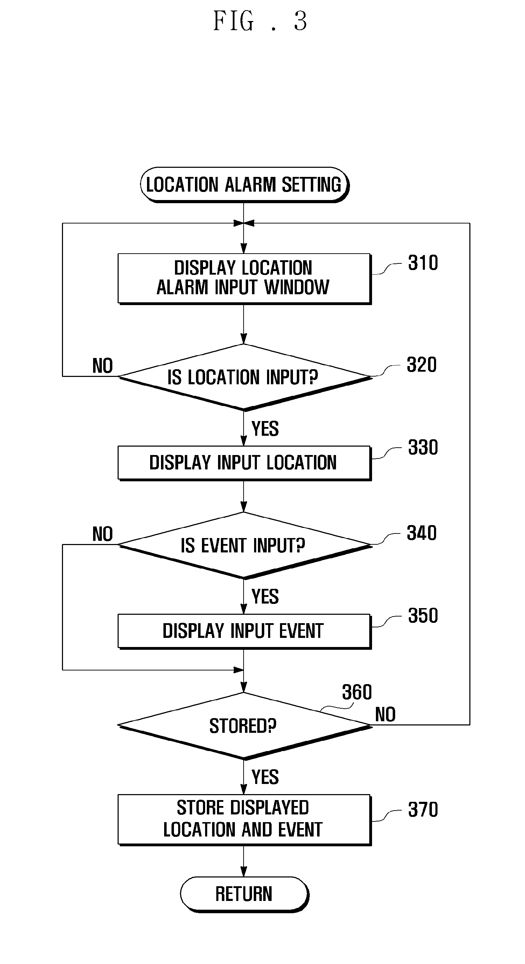

If at S220 the controller 170 determines that location information is not stored in the memory 160, the controller 170 may control the display unit 150 to display a pop-up message that a stored location and event do not exist (S270). After that, the controller 170 may determine whether a location alarm setting is selected (S280). For example, the controller 170 may determine whether a location alarm setting is selected through the input unit 140 or a menu. If a location alarm setting is selected through the input unit 140 or a menu at S280, the controller 170 may detect the selection and set a location alarm (S290). The location alarm setting will be described in detail with reference to FIG. 3.

FIG. 3 is a flow chart describing a method for setting a location alarm according to exemplary embodiments of the present invention.

Referring to FIG. 3, when a location alarm setting is selected at S280, the controller 170 may control the display unit 150 to display a location alarm input window (S310). The location alarm input window may be composed of: a location input field 153 for receiving a location to be stored; an event input field 155 for receiving an event that a user may perform at the location specified in the location input field 153; and an alarm input field for setting an alarm method to notify a location. The event input field 155 may further include a date input field through which a user may specify a date on which an event may be performed.

The controller 170 may determine whether a location is input to the location alarm input window of the display unit 150 (S320). If a user has input a location to the location alarm input window through the input unit 140 at S320, the controller 170 detects the input and may display the input location on the location alarm input window (S330). The controller 170 can check location information corresponding to the input location by searching the Internet and/or through location information stored in the memory 160.

The controller 170 may determine whether an event is input to the location alarm input window of the display unit 150 (S340). If the controller 170 determines that an event has been input to the location alarm input window through the input unit 140 at S340, the controller 170 may display the input event on the location alarm input window (S350). Subsequently, the controller 170 may determine whether a save menu has been selected (S360). On the other hand, if the controller 170 determines that an event has not been input to the location alarm input window at S340, it proceeds with S360.

If the controller 170 determines that a save menu has not been selected through the input unit 140 at S360, the controller 170 may proceed with S310. If the controller 170 determines that a save menu has been selected at S360, the controller 170 may save the displayed location and event in the memory 160 (S370). That is, the controller 170 can store location information corresponding to the displayed location of S330 together with the event in the memory 160. Subsequently, the location alarm mode shown in FIG. 2 may be performed.

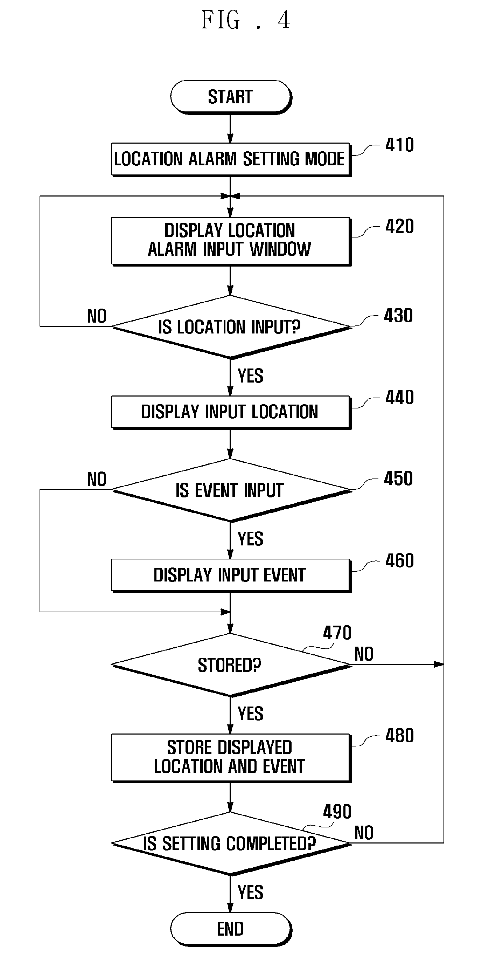

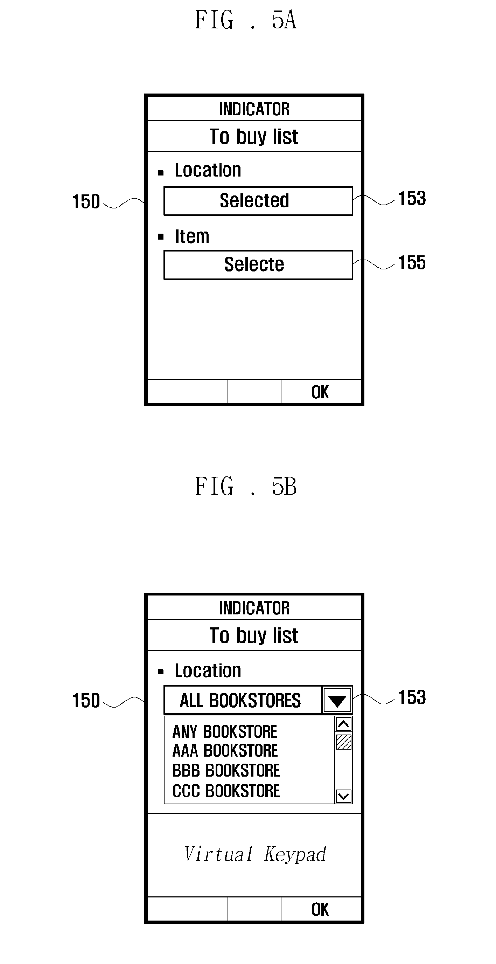

FIG. 4 is a flow chart describing a method for performing a location alarm setting mode according to exemplary embodiments of the present invention. FIG. 5A to FIG. 5J show screen shots of a portable terminal operating in a location alarm setting mode according to exemplary embodiments of the present invention.

Referring to FIG. 4, when a location alarm setting mode is selected through a menu or a function key of the input unit 140, the controller 170 may detect the selection and change the mode of a portable terminal to a location alarm setting mode (S410). The location alarm setting mode may include several modes through which a user can input locations. Examples of location alarm setting modes include, but are not limited to, a personal schedule management mode, a memo mode, a buy listing mode, a subway route display mode, and/or a map display mode. In some exemplary embodiments of the present invention, the location alarm setting mode may be described based on a buy listing mode.

The controller 170 may display a location alarm input window on the display unit 150 (S420). The location alarm input window may include a location input field 153 for receiving a location and an event input field 155 for receiving an event that a user may perform at the input location. For example, if the location alarm setting mode is a personal schedule management mode, the controller 170 may instruct the display unit 150 to display a location input field 153 for receiving a location and an event input field 155 for receiving a date and/or an event. If the location alarm setting mode is a buy listing mode, the controller 170 may instruct the display unit 150 to display an event input field 155 for receiving a buy list and a location input field 153 for receiving a location where goods in the input list can be purchased, as shown in FIG. 5A.

The controller 170 may determine whether a location is input to the location input field 153 through the input unit 140 (S430). If the controller 170 ascertains that a location has been input to the location input field 153 at S430, the controller 170 may display the input location on the display unit 150 (S440). The controller 170 can check location information corresponding to the input location by searching the Internet and/or through location information stored in the memory 160. The controller 170 may determine whether an event that a user may perform at the input location is input through the input unit 140 (S450). If the controller 170 ascertains that an event has been input through the input unit 140 at S450, the controller 170 may display the input event on the display unit 150 (S460).

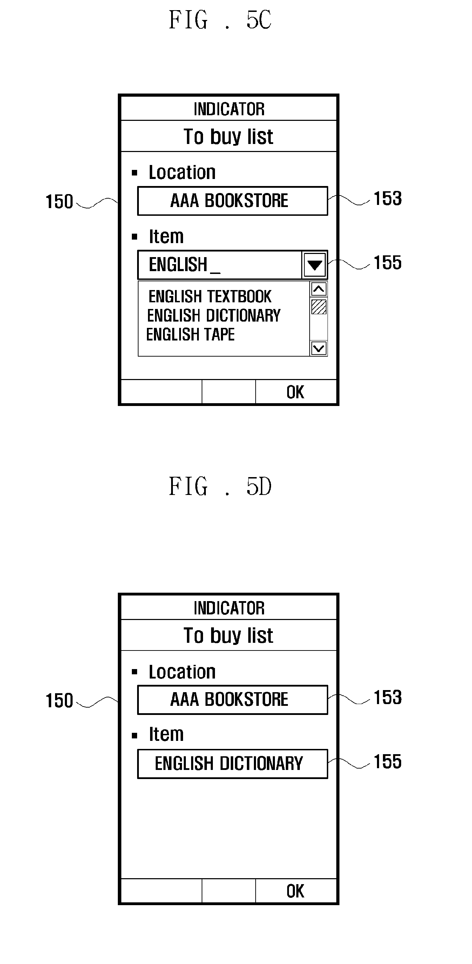

For example, a user may set a portable terminal to buy an English dictionary at AAA bookstore in the buy listing mode. As shown in FIG. 5B, the user may select one of the bookstores in the location input field 153 through input unit 140 to buy an English dictionary. After that, as shown in FIG. 5C, an English dictionary may be selected from an item input field as an item to buy and subsequently an OK key is entered. As shown in FIG. 5D, the controller 170 may display an English dictionary as an item to buy and AAA bookstore as a selected location. If an item to buy is selected from the item input field through the input unit 140, the controller 170 may: search for a store through location information stored in the memory 160; search for a store through the Internet and display a location to sell the item; or automatically select a searched location. If a user first inputs a particular event, the controller 170 may determine whether there is a place where the input event is frequently performed and may search for and automatically select a location corresponding to the determined place location. In some exemplary embodiments, the controller 170 may determine whether an event is input before determining whether a location has been input.

The controller 170 may determine whether a save menu is selected (S470). If a user selects a save menu or confirmation menu through the input unit 140 at S470, the controller 170 may detect the selection and may store the displayed location and event in the memory 160 (S480). If an English dictionary as an event and AAA bookstore as a location are input in a buy listing mode, the controller 170 may store the English dictionary corresponding to an input event and the AAA bookstore corresponding to location information in the memory 160. Stored events and location information can be used to analyze a portable terminal user's purchasing pattern. When a search process is performed in the buy listing mode, the controller 170 can sort events and pieces of location information from the highest preference based on the user's purchasing pattern, so that the user can easily select his/her preferred event and location information.

The controller 170 may determine whether a setting completion is selected through the input unit 140 (S490). If the controller 170 ascertains that a setting completion is not selected at S490, the controller 170 may proceed to S420. In that case, the controller 170 may receive a plurality of locations and events from the user and store location information and an event corresponding to the input location in the memory 160.

Although the location alarm setting method described above is based on a buy listing mode, it should be understood that the location alarm can be set in a variety of modes.

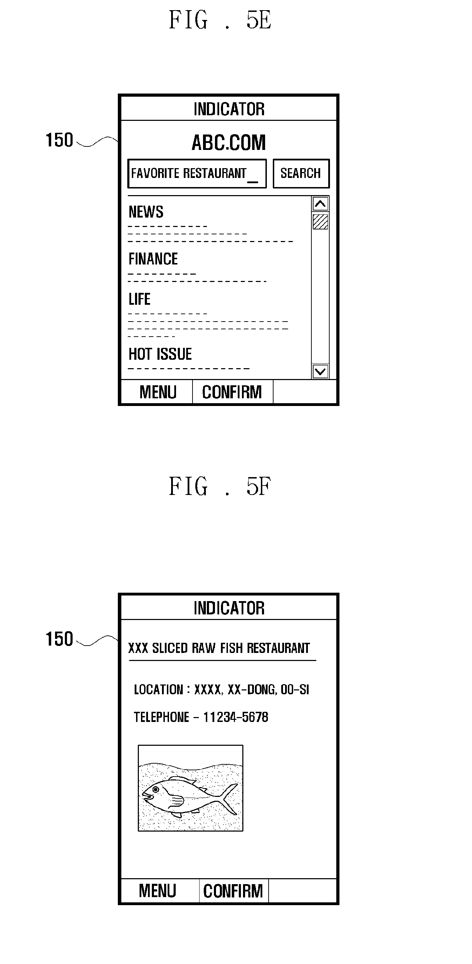

For example, a location and an event for a location alarm can be input to the portable terminal through the Internet. As shown in FIG. 5E, a portable terminal user may search for a favorite restaurant through the Internet. If the user searches for a favorite restaurant through the Internet, the controller 170 of a portable terminal may download contents corresponding to the searched favorite restaurants from the Internet and may display the downloaded contents on the display unit 150 as shown in FIG. 5F. The downloaded contents may include, but are not limited to, an image, text information, and location information of the user's selected favorite restaurant. If a location alarm setting mode is selected through a menu or the input unit 140 of the portable terminal, the controller 170 may check location information and an event from the downloaded contents. Subsequently, the controller 170 may store the checked location information and event in the memory 160. That is, in a location alarm setting mode, the controller 170 may automatically store location information about a favorite restaurant searched through the Internet in the memory 160. The controller 170 can store downloaded contents as an event, such as a favorite restaurant, in the memory 160. The controller 170 can also receive, from the user, an event that the user may perform at a selected location and subsequently store the event in the memory 160. After that, the controller 170 may store location information downloaded from the Internet and an event in the memory 160 and may compare the store location information with a current location of a portable terminal in a location alarm mode.

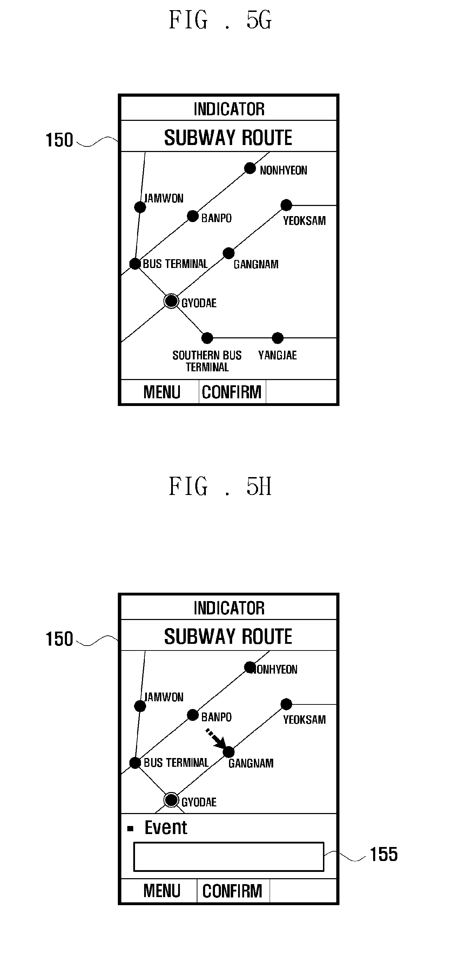

According to another example, if a subway route map or a map is stored in the memory 160, a location alarm may be set as follows. If a user selects a subway route display mode or a map display mode through the input unit 140 or a menu in the portable terminal, the controller 170 may instruct the display unit 150 to display the subway route map or the map stored in the memory 160, as shown in FIG. 5G. If a location alarm setting mode is selected through the input unit 140 or the menu, the controller 170 may determine whether a particular location is selected in the displayed subway route map or the map. The particular location can be input through the location input field 153. If a particular location has been selected on the subway route map or the map through the input unit 140, the controller 170 checks location information corresponding to the selected location. After that, a save menu may be selected through the input unit 140, and the controller 170 may store the checked location information in the memory 160. If an event is also input, the controller 170 can store the input event together with the location information in the memory 160. For example, as shown in FIG. 5G, if a subway route map is displayed, the controller 170 may determine whether a location alarm setting mode is selected. If the location alarm setting mode has been selected, the controller 170 may determine whether a location is selected on the displayed subway route map. As shown in FIG. 5H, if a user has selected, for example, Gangnam station, the controller 170 may: detect the selected Gangnam station; search for location information corresponding to Gangnam station; and store the Gangnam station location information in the memory 160. The controller 170 may display an event input field 155 for receiving an event and may allow a user to input events, such as an appointment, a hobby activity, and/or an interesting place.

According to another example, a location alarm can be set through a mode for managing a personal schedule, such as a PIMS. If a user selects a schedule management mode or a menu mode through a menu or the input unit 140 and inputs a variety of personal information, events, and/or locations, the controller 170 may: recognize the locations and events; search for location information corresponding to the recognized locations through the Internet and/or from the memory 160; and store the searched location information as location information to be compared with information about a current location in a location alarm mode. For example, if a personal schedule management mode is selected, the controller 170 may display a location input field 153 for receiving a location and an event input field 155 for receiving events, such as a task, as shown in FIG. 5I. Subsequently, as shown in FIG. 5J, 'Gangnam station' may be input to the location input field 153 and 'meeting with 000' may be input to the event input field 155. Next, a save menu may be selected. The controller 170 may search for location information corresponding to 'Gangnam station' through the Internet and/or from stored location information. After that, the controller 170 may store the searched location information and 'meeting with 000' as an event in the memory 160. The controller 170 may also store a time and/or date (e.g., 20:00, Jul. 3, 2008) that a storing process is performed with location information corresponding to 'Gangnam station' and 'meeting with 000.' As the user arrives at Gangnam station, the controller 170 may output an alarm to notify that the user has arrived at a location corresponding to the stored location information. The controller 170 may then display 'meeting with 000,' as an event, and date '20:00, Jul. 3, 2008,' on the display unit 150.

As described above, the portable terminal can store location information corresponding to a location of user interest and an event that the user may perform at the place. The portable terminal can output an alarm each time that the user moves to locations corresponding to stored location information so that the user can recognize the stored interesting locations.

In the following description, a method for sequentially performing a location alarm mode and a location alarm setting mode is explained in detail.

FIG. 6 is a flow chart describing a method for performing a location alarm mode according to exemplary embodiments of the present invention.

Referring to FIG. 6, the controller 170 may display a standby screen on the display unit 150 (S61 0), and may determine whether a location alarm setting mode is selected (S620). If a location alarm setting mode is selected through a menu or the input unit 140 at S620, the controller 170 may set a location alarm in a portable terminal (S630). The location alarm setting process may be the same as shown in FIG. 3. If a location and an event are input through the input unit 140, the controller 170 can search for location information corresponding to the input location through the Internet and/or location information stored in the memory 160, and may then store the searched location information together with the event.

The controller 170 may determine whether a location alarm setting mode has been completed (S640). If the controller 170 ascertains that a location alarm setting mode is not completed through the input unit 140 at S640, the controller 170 may proceed with S630, so that a plurality of locations and events input by the user can be stored.

On the contrary, if the controller 170 ascertains that a location alarm setting mode is completed through the input unit 140 at S640, the controller 170 may perform a location alarm mode at S650. The controller 170 may instruct the display unit 150 to display a standby screen or a screen showing that a location alarm mode is being performed. The controller 170 can also perform modes selected by the input unit 140. The performed modes may include one or more modes that can be performed in a portable terminal, such as a camera mode, an MP3 mode, and/or a call mode.

The controller 170 may then check a current location of a portable terminal (S660). The controller 170 can extract location information about the current location of a portable terminal from satellite information received through the GPS unit 120 and/or the communication unit 110. The controller 170 can check the current location of a portable terminal through the extracted current location information.

The controller 170 may compare the extracted current location information with location information stored in the memory 160 and may determine whether the checked current location of a portable terminal corresponds to a location stored in the memory 160 (S670).

If the controller 170 ascertains that the checked current location corresponds to a location stored in the memory 160 at S670, the controller 170 may output an alarm and an event, through a preset alarming method (S680). The controller 170 may control the audio processing unit 130 to output an alarm through a preset alarming method in order to notify that the current location corresponds to a stored location. The controller 170 may also control the display unit 150 to display an event that the user may perform at the stored location. The preset alarming method may be a vibration, a lamp (no sound), and/or a bell sound. On the contrary, if the controller 170 ascertains that the checked current location does not correspond to a location stored in the memory 160 at S670, the controller 170 may proceed with S660. That is, the controller 170 may repeat S660 and S670 until the checked current location corresponds to a stored location.

Next, the controller 170 may determine whether a location alarm mode termination is selected (S690). If the controller 170 ascertains that a location alarm mode termination has not been selected through the input unit 140 at S690, the controller 170 may proceed with S660 and may repeat from S660 to S690 until the location alarm mode is completed. While these processes are repeated, the controller 170 may output an alarm through a preset alarming method each time that the current location of the portable terminal corresponds to the stored location.

For example, if a user sets a location to AAA bookstore and an event to buying an English dictionary in a buy listing mode as a location alarm setting mode, the controller 170 may store location information corresponding to AAA bookstore and an English dictionary buying event in the memory 160. The controller 170 may then determine whether location information about a current location of a portable terminal corresponds to the stored location information about AAA bookstore in a location alarm mode. If location information about a current location of a portable terminal corresponds to the stored location information about AAA bookstore, the controller 170 may instruct the audio processing unit 130 to output an alarm through a preset alarming method. The controller 170 may also instruct the display unit 150 to display a pop-up message showing an English dictionary buying event.

According to another example, if a user marks a particular location on a map stored in the memory 160, and inputs an event in a map display mode, the controller 170 may store location information and one or more events corresponding to the marked particular location. The controller 170 may determine whether location information about a current location of a portable terminal corresponds to stored location information and outputs an alarm according to the determination. For example, if a user marks a supermarket near the user's house on a map through the input unit 140 and inputs 'buying goods' as an event, the controller 170 may check location information corresponding to the marked supermarket. After that, the controller 170 may store the checked location information and 'buying goods' as an event. Next, the controller 170 may determine whether location information about a current location of the portable terminal corresponds to the stored location information about the marked supermarket. If the controller 170 ascertains that location information about a current location of the portable terminal corresponds to the stored location information about the marked supermarket, the controller 170 may instruct the display unit 150 to display 'buying goods' as an event. The controller 170 may also instruct the audio processing unit 130 to output an alarm.

According to another example, if a user inputs an appointment place and an appointment in a PIMS mode, the controller 170 may search for the appointment as an event and location information corresponding to the input appointment place as a location and may subsequently store the corresponding event and location information. After that, the controller 170 may check location information for a current location of a portable terminal. If the controller 170 ascertains that the checked current location information corresponds to stored location information, the controller 170 may instruct the display unit 150 to display the appointment as an event and may also instruct the audio processing unit 130 to output an alarm through a preset alarming method.

In particular, if a plurality of stored locations is stored in the memory 160, the controller 170 may compare current location information of a portable terminal to location information corresponding to the stored locations and may determine whether any stored location information corresponds to the current location information. If the controller 170 ascertains that there is stored location information corresponding to the current location information, the controller 170 may output an alarm through a preset alarming method.

Using the location alarm outputting method described above, the portable terminal can provide an alarm service to notify a user of a stored location. Furthermore, the portable terminal adapted to the location alarm outputting method can apply location information to the other functions and can provide various integral functions to a user.

As described above, if information about a location currently located by the portable terminal corresponds to stored location information in a portable terminal, the controller 170 can output a set location and an event that a user can perform at the set location. Therefore, the portable terminal can provide, using the location information, a variety of services which cannot be supported in conventional portable terminals.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method for controlling a location alarm in a portable terminal, comprising:
determining, in a location alarm mode, whether location information is stored in the portable terminal;
checking current location information corresponding to a current location of the portable terminal if the location information is stored;
determining whether the current location information corresponds to the stored location information; and
outputting the location alarm if the current location information corresponds to the stored location information.

2. The method of claim 1, wherein outputting the location alarm further comprises:
displaying, if an event corresponding to the current location information is stored, information corresponding to the event on a display unit.

3. The method of claim 1, wherein checking current location information comprises extracting the current location information through satellite information received via a global positioning system unit and/or a communication unit.

4. The method of claim 1, further comprising:
receiving, in a location alarm setting mode, the location information corresponding to a location to be alarmed at and an event to be performed at the location; and
storing the location information and the input event.

5. The method of claim 1, wherein outputting the location alarm further comprises:
displaying, if the location information is stored, information corresponding to the event.

6. The method of claim 1, wherein the location alarm is performed by at least one of a vibration, a bell sound, and a lamp.

7. The method of claim 4, wherein the location alarm setting mode is at least one of a schedule management mode, a memo mode, a buy listing mode, a subway route map display mode, and a map display mode.

8. The method of claim 4, wherein receiving location information and an event comprises:
determining whether a location to be alarmed at has been received; and
searching, if a location to be alarmed at has been received, for location information corresponding to the received location.

9. The method of claim 8, wherein searching for location information comprises searching for location information corresponding to the received location through the Internet and/or through previously stored location information.

10. The method of claim 7, wherein receiving location information and an event comprises:
displaying a map if the location alarm setting mode is the map display mode; and
searching for location information corresponding to a marked location on the map; and
storing the searched location information.

11. A portable terminal, comprising:
a global positioning system unit to receive at least one piece of location information corresponding to a current location of the portable terminal;
an audio processing unit to output an alarm; and
a controller to compare the current location information, received through the global positioning system unit, with stored location information, the controller configured to instruct the audio processing unit to output the alarm if the current location information corresponds to the stored location information.

12. The portable terminal of claim 11, further comprising:
a memory to store the location information.

13. The portable terminal of claim 11, wherein the controller searches for location information corresponding to an input location where the alarm is output, the controller storing the searched location information in the memory.

14. The portable terminal of claim 13, wherein the memory stores the location information corresponding to the input location information and an input event that must be performed at the location where the alarm is output.

15. The portable terminal of claim 14, further comprising:
a display unit to display the stored event when the alarm is output in a location alarm mode.
